# EUROPEAN PATENT APPLICATION

(11) **EP 4 247 018 A1**
(43) Date of publication of application: **20.09.2023**
(21) Application number: 21909168.3
(22) Date of filing: 09.12.2021
(51) Int. Cl.: H04W 4/30, H04W 4/80

(54) **METHOD AND APPARATUS FOR MANAGING ACCESSORY DEVICE, AND ACCESSORY DEVICE**

(30) Priority: 22.12.2020 CN 202011530532
(71) Applicant: Huawei Technologies Co., Ltd., Shenzhen, Guangdong 518129 (CN)
(72) Inventor: DAI, Haitao, Shenzhen, Guangdong 518129 (CN)
(74) Representative: Maiwald GmbH
(86) International application number: PCT/CN2021/136865
(87) International publication number: WO 2022/135171

(57) **Abstract**

Embodiments of this application relate to a method for managing an auxiliary device. The method includes: receiving a broadcast message sent by at least one auxiliary device; determining, based on the broadcast message, a device type of the auxiliary device that sends the broadcast message; determining, based on the device type of the auxiliary device, a dedicated transceiver corresponding to the device type; and communicating with the auxiliary device through the dedicated transceiver, so that a target application performs data exchange of target data with the auxiliary device, where the target application sends and/or receives the target data through a device management service SDK. In this application, the dedicated transceiver is configured, a corresponding dedicated transceiver is determined by identifying the device type of the auxiliary device, and the dedicated transceiver is configured to communicate with the auxiliary device. Any auxiliary device is adapted, and a dedicated APP does not need to be deployed for each type of auxiliary device. In addition, communication between a wearable device and the auxiliary device may be further supported.

## Description

This application claims priority to Chinese Patent Application No. 202011530532.8, filed with the China National Intellectual Property Administration on December 22, 2020 and entitled "METHOD AND APPARATUS FOR MANAGING AUXILIARY DEVICE, AND AUXILIARY DEVICE", which is incorporated herein by reference in its entirety.

### TECHNICAL FIELD

This application relates to the field of device management, and in particular, to a method and an apparatus for managing an auxiliary device by a terminal device and/or a wearable device, and an auxiliary device.

### BACKGROUND

The Internet of Things (Internet of Things, IoT), namely an "Internet to which everything is connected", is a network that is extended and expanded based on the Internet. The Internet of Things is a huge network that combines various information sensing devices with the Internet, so that people, machines, and things can communicate with each other anytime and anywhere.

A wearable device (wearable device, WD) belongs to a broad IoT device category. The wearable device is, for example, a sport band, a sport watch, a smart watch, virtual reality (virtual reality, VR) glasses, or augmented reality (augmented reality, AR) glasses. As IoT devices are increasingly popular in people's life, these wearable devices generate a large amount of fitness and health data every day. However, a storage capacity of the wearable device is very limited, and most wearable devices cannot directly communicate with a cloud end (cloud end, CE). For example, most wearable devices such as sport watches and bands lack a wireless fidelity (wireless fidelity, Wi-Fi) module or a modem (modem), but almost all the wearable devices are provided with built-in Bluetooth (Bluetooth) or Bluetooth low energy (Bluetooth low energy, BLE), or a built-in dual-mode chip supporting both Bluetooth and Bluetooth low energy, so that the wearable device provided with built-in Bluetooth and/or Bluetooth low energy can communicate with a terminal device also provided with built-in Bluetooth and/or Bluetooth low energy. Bluetooth may be classic Bluetooth, for example, Bluetooth basic rate/enhanced data rate (Bluetooth basic rate/ enhanced data rate, BR/EDR).

In addition, in addition to the wearable device, the terminal device may be further connected to a wider range of IoT devices, that is, auxiliary devices. Sport and health auxiliary devices may include, for example, a blood glucose device having continuous blood glucose monitoring (continuous glucose monitoring, GCM), a body fat device (body fat), an electrocardiogram device, and a fitness device. The electrocardiogram device may be, for example, an electro cardio graphy (electro cardio graphy, ECG) belt or an ECG ring. The fitness device may include a treadmill, a rowing machine, an elliptical machine, a smart rope, or the like. Certainly, in addition to the sport and health auxiliary devices, a typical auxiliary device may further include a smart home auxiliary device or a head unit device having an in-vehicle infotainment (in-vehicle infotainment, IVI) system. The smart home auxiliary device may be, for example, a smart lamp, a smart air conditioner, or a smart television. The terminal device may manage these wearable devices or auxiliary devices, for example, obtain and display some statuses and data, configure and control a paired and connected wearable device or auxiliary device, and provide a channel for communication.

However, when the current terminal device manages the foregoing massive different types of auxiliary devices, an adaptive application (application, APP) usually needs to be independently developed, which causes high research and development costs and does not have universality.

### SUMMARY

An embodiment of this application provides a method for managing an auxiliary device. The method is applied to a terminal device or a wearable device. A corresponding dedicated transceiver is configured in the terminal device or the wearable device, and corresponding dedicated transceivers are selected for different auxiliary devices to receive and send data. In this way, any auxiliary device is adapted, and a dedicated APP does not need to be deployed for each type of auxiliary device. In addition, communication between the wearable device and the auxiliary device may be further supported.

According to a first aspect, a method for managing an auxiliary device is provided, where the method is applied to a terminal device or a wearable device, the terminal device or the wearable device includes a target application, the target application includes a device management service software development kit (software development kit, SDK), and the method includes: receiving a broadcast message sent by at least one auxiliary device; determining, based on the broadcast message, a device type of the auxiliary device that sends the broadcast message; determining, based on the device type of the auxiliary device, a dedicated transceiver corresponding to the device type; and communicating with the auxiliary device through the dedicated transceiver, so that the target application performs data exchange of target data with the auxiliary device, where the target application sends and/or receives the target data through the device management service SDK. In this application, the dedicated transceiver is configured, a corresponding dedicated transceiver is determined by identifying the device type of the auxiliary device, and the dedicated transceiver is configured to communicate with the auxiliary device. Any auxiliary device is adapted, and a dedicated APP does not need to be deployed for each type of auxiliary device. In addition, communication between the wearable device and the auxiliary device may be further supported.

In a possible implementation, the communicating with the auxiliary device through the dedicated transceiver includes: receiving, through the dedicated transceiver, the target data sent by the auxiliary device; sending the target data to a convergence and forwarding module through the dedicated transceiver; determining, based on a pre-configured target application and target data relationship, the target application corresponding to the target data; and sending the target data to the device management service SDK through the convergence and forwarding module, so that the target application reads and uses the target data through the device management service SDK. In this application, the dedicated transceiver is configured, and data from the auxiliary device is received through the dedicated transceiver. Any auxiliary device is adapted through the dedicated transceiver, and communication can be implemented without deploying a dedicated APP for each type of auxiliary device.

In a possible implementation, if the method is applied to the wearable device, before the sending the target data to the device management service SDK through the convergence and forwarding module, the method further includes: determining that the target application is a target application of the terminal device or a target application of the wearable device; and sending the target data to the terminal device if the target application is the target application of the terminal device. In this application, if the method is applied to the wearable device, it may be further identified that the target application is located on the terminal device or the wearable device, and if the target application is located on the terminal device, the target data is forwarded to the terminal device, so that the terminal device communicates with an auxiliary device attached to the wearable device based on the wearable device.

In a possible implementation, the communicating with the auxiliary device through the dedicated transceiver includes: sending, through the device management service SDK, the target data generated by the target application to the convergence and forwarding module; forwarding the target data to the dedicated transceiver through the convergence and forwarding module; and sending the target data to the auxiliary device through the dedicated transceiver. In this application, the dedicated transceiver is configured, and data from the auxiliary device is received through the dedicated transceiver. Any auxiliary device is adapted through the dedicated transceiver, and communication can be implemented without deploying a dedicated APP for each type of auxiliary device.

In a possible implementation, the device type includes: a standard device type and a first non-standard device type; and the dedicated transceiver includes: a standard protocol transceiver, where the standard protocol transceiver is a dedicated transceiver corresponding to an auxiliary device of the standard device type and an auxiliary device of the first non-standard device type.

In a possible implementation, the auxiliary device of the first non-standard device type includes a product development kit (product development kit, PDK); and the communicating with the auxiliary device through the dedicated transceiver includes: receiving, through the standard protocol transceiver, the target data sent by the auxiliary device of the first non-standard device type, where the target data is target data determined by the auxiliary device of the first non-standard device type by performing protocol format conversion through the PDK. In this application, communication with the auxiliary device of the first non-standard device type can be implemented through the dedicated transceiver. The PDK is pre-installed in the auxiliary device of the first non-standard device type, to ensure that data during communication is in a standard protocol format, so that communication can be implemented without deploying a dedicated APP for each type of auxiliary device.

In a possible implementation, the device type includes: a second non-standard device type; and the dedicated transceiver includes: a non-standard protocol transceiver, where the non-standard protocol transceiver is a dedicated transceiver corresponding to an auxiliary device of the second non-standard device type.

In a possible implementation, the communicating with the auxiliary device through the dedicated transceiver includes: performing, through the non-standard protocol transceiver, protocol format conversion on data that is in a non-standard protocol format and that is received from the auxiliary device of the second non-standard device type, to obtain the target data; and performing, through the non-standard protocol transceiver, protocol format conversion on the target data sent to the auxiliary device of the second non-standard device type, to obtain the data in the non-standard protocol format. In this application, format conversion is performed on the target data through the dedicated transceiver. In this way, a device using a standard protocol format communicates with an auxiliary device using a non-standard protocol format, so that communication can be implemented without deploying a dedicated APP for the auxiliary device using the non-standard protocol format.

In a possible implementation, the method further includes: checking, through a non-standard protocol transceiver interface, the target data sent to and received by the non-standard protocol transceiver, and converting a protocol format of the data in the non-standard protocol format in the target data to a standard protocol format. In this application, the target data is checked through the non-standard protocol transceiver interface, to ensure that all data sent to the target application is in a standard protocol format, and avoid a case that the target application cannot parse the target data due to different protocol formats.

In a possible implementation, if the method is applied to the terminal device, the device type includes: a wearable device type; and the dedicated transceiver includes: a wearable protocol transceiver, where the wearable protocol transceiver is a dedicated transceiver corresponding to an auxiliary device of the wearable device type.

In a possible implementation, the target data includes: an operation instruction and/or parameter data. In this application, the target data includes the operation instruction and/or the parameter data, so that when the terminal device or the wearable device communicates with the auxiliary device, data transmission can be implemented, and an instruction can also be transferred to control a peer end.

In a possible implementation, the target data is target data in a standard protocol format, and the standard protocol format is a generic attribute profile (generic attribute profile, GATT) format.

According to a second aspect, an apparatus for managing an auxiliary device is provided, where the apparatus is a terminal device or a wearable device, the apparatus includes a target application, the target application includes a device management service software development kit SDK, and the apparatus includes: a universal transceiver, configured to receive a broadcast message sent by at least one auxiliary device; and a processor, configured to be coupled to a memory, and read and execute instructions stored in the memory, where when run, the processor executes the instructions, so that the processor is configured to determine, based on the broadcast message, a device type of the auxiliary device that sends the broadcast message; the processor is further configured to determine, based on the device type of the auxiliary device, a dedicated transceiver corresponding to the device type; and the processor is further configured to communicate with the auxiliary device through the dedicated transceiver, so that the target application performs data exchange of target data with the auxiliary device, where the target application sends and/or receives the target data through the device management service SDK. In this application, the dedicated transceiver is configured, a corresponding dedicated transceiver is determined by identifying the device type of the auxiliary device, and the dedicated transceiver is configured to communicate with the auxiliary device. Any auxiliary device is adapted, and a dedicated APP does not need to be deployed for each type of auxiliary device. In addition, communication between the wearable device and the auxiliary device may be further supported.

In a possible implementation, the processor is further configured to: control the dedicated transceiver to receive the target data sent by the auxiliary device; control the dedicated transceiver to send the target data to a convergence and forwarding module; determine, based on a pre-configured target application and target data relationship, the target application corresponding to the target data; and control the convergence and forwarding module to send the target data to the device management service SDK, so that the target application reads and uses the target data through the device management service SDK. In this application, the dedicated transceiver is configured, and data from the auxiliary device is received through the dedicated transceiver. Any auxiliary device is adapted through the dedicated transceiver, and communication can be implemented without deploying a dedicated APP for each type of auxiliary device.

In a possible implementation, if the apparatus is the wearable device, the processor is further configured to: determine that the target application is a target application of the terminal device or a target application of the wearable device; and send the target data to the terminal device through the universal transceiver if the target application is the target application of the terminal device. In this application, if the method is applied to the wearable device, it may be further identified that the target application is located on the terminal device or the wearable device, and if the target application is located on the terminal device, the target data is forwarded to the terminal device, so that the terminal device communicates with an auxiliary device attached to the wearable device based on the wearable device.

In a possible implementation, the processor is further configured to: send, through the device management service SDK, the target data generated by the target application to the convergence and forwarding module; control the convergence and forwarding module to forward the target data to the dedicated transceiver; and control the dedicated transceiver to send the target data to the auxiliary device. In this application, the dedicated transceiver is configured, and data from the auxiliary device is received through the dedicated transceiver. Any auxiliary device is adapted through the dedicated transceiver, and communication can be implemented without deploying a dedicated APP for each type of auxiliary device.

In a possible implementation, the device type includes: a standard device type and a first non-standard device type; and the dedicated transceiver includes: a standard protocol transceiver, where the standard protocol transceiver is a dedicated transceiver corresponding to an auxiliary device of the standard device type and an auxiliary device of the first non-standard device type.

In a possible implementation, the processor is further configured to: control the standard protocol transceiver to receive the target data sent by the auxiliary device of the first non-standard device type, where the target data is target data determined by the auxiliary device of the first non-standard device type by performing protocol format conversion through a product development kit PDK. In this application, communication with the auxiliary device of the first non-standard device type can be implemented through the dedicated transceiver. The PDK is pre-installed in the auxiliary device of the first non-standard device type, to ensure that data during communication is in a standard protocol format, so that communication can be implemented without deploying a dedicated APP for each type of auxiliary device.

In a possible implementation, the device type includes: a second non-standard device type; and the dedicated transceiver includes: a non-standard protocol transceiver, where the non-standard protocol transceiver is a dedicated transceiver corresponding to an auxiliary device of the second non-standard device type.

In a possible implementation, the processor is further configured to: control the non-standard protocol transceiver to perform protocol format conversion on data that is in a non-standard protocol format and that is received from the auxiliary device of the second non-standard device type, to obtain the target data; and control the non-standard protocol transceiver to perform protocol format conversion on the target data sent to the auxiliary device of the second non-standard device type, to obtain the data in the non-standard protocol format. In this application, protocol format conversion is performed on the target data through the dedicated transceiver. In this way, a device using a standard protocol format communicates with an auxiliary device using a non-standard protocol format, so that communication can be implemented without deploying a dedicated APP for the auxiliary device using the non-standard protocol format.

In a possible implementation, the apparatus further includes a non-standard protocol transceiver interface; and the processor is further configured to control the non-standard protocol transceiver interface to check the target data sent to and received by the non-standard protocol transceiver, and convert a protocol format of the data in the non-standard protocol format in the target data to a standard protocol format. In this application, the target data is checked through the non-standard protocol transceiver interface, to ensure that all data sent to the target application is in a standard protocol format, and avoid a case that the target application cannot parse the target data due to different protocol formats.

In a possible implementation, if the apparatus is the terminal device, the device type includes: a wearable device type; and the dedicated transceiver includes: a wearable protocol transceiver, where the wearable protocol transceiver is a dedicated transceiver corresponding to an auxiliary device of the wearable device type.

In a possible implementation, the target data includes: an operation instruction and/or parameter data. In this application, the target data includes the operation instruction and/or the parameter data, so that when the terminal device or the wearable device communicates with the auxiliary device, data transmission can be implemented, and an instruction can also be transferred to control a peer end.

In a possible implementation, the target data is target data in a standard protocol format, and the standard protocol format is a generic attribute profile GATT format.

According to a third aspect, an auxiliary device is provided, where a product development kit PDK is pre-installed in the auxiliary device, and the auxiliary device includes: a sensor, configured to generate parameter data; a processor, configured to be coupled to a memory, and read and execute instructions stored in the memory, where when run, the processor executes the instructions, so that the processor is configured to control the PDK to perform protocol format conversion on the parameter data and/or an operation instruction, to obtain target data; and a sender, configured to send the target data. In this application, the PDK is pre-installed in the auxiliary device, so that the target data sent by the auxiliary device is in a standard protocol format, and a peer end does not need to deploy a dedicated APP for the auxiliary device.

In a possible implementation, the auxiliary device further includes: a receiver, configured to receive the target data sent by a terminal device or a wearable device, where the processor is further configured to control the PDK to perform protocol format conversion on the target data, to obtain the parameter data and/or the operation instruction.

According to a fourth aspect, a computer-readable storage medium is provided. The computer-readable storage medium stores instructions. When the instructions run on a terminal, the terminal is enabled to perform the method according to any implementation of the first aspect.

According to a fifth aspect, a computer device including instructions is provided. When the computer device runs on a terminal, the terminal is enabled to perform the method according to any one of the implementations of the first aspect.

This application discloses the method and the apparatus for managing an auxiliary device, and the auxiliary device. A corresponding dedicated transceiver is determined by identifying the device type of the auxiliary device, and the dedicated transceiver is configured to communicate with the auxiliary device. In this way, any auxiliary device is adapted, and a dedicated APP does not need to be deployed for each type of auxiliary device. In addition, because the method may be applied to a wearable device, communication between the wearable device and the auxiliary device may be further supported.

### BRIEF DESCRIPTION OF DRAWINGS

FIG. 1 is a schematic diagram of an application scenario according to an embodiment of this application;
FIG. 2 is a schematic diagram of an architecture of an apparatus for managing an auxiliary device according to an embodiment of this application;
FIG. 3 is a schematic diagram of an architecture of a terminal device according to an embodiment of this application;
FIG. 4 is a flowchart of a method for managing an auxiliary device according to an embodiment of this application;
FIG. 5 is a flowchart of another method for managing an auxiliary device according to an embodiment of this application;
FIG. 6 is a schematic diagram of an architecture of a wearable device according to an embodiment of this application;
FIG. 7 is a schematic diagram of an architecture of another terminal device according to an embodiment of this application;
FIG. 8 is a schematic diagram of an architecture of another wearable device according to an embodiment of this application;
FIG. 9 is a flowchart of another method for managing an auxiliary device according to an embodiment of this application;
FIG. 10 is a flowchart of still another method for managing an auxiliary device according to an embodiment of this application;
FIG. 11 is a flowchart of still another method for managing an auxiliary device according to an embodiment of this application;
FIG. 12 is a schematic diagram of an apparatus for managing an auxiliary device according to an embodiment of this application; and
FIG. 13 is a schematic diagram of an auxiliary device according to an embodiment of this application.

### DESCRIPTION OF EMBODIMENTS

The following describes technical solutions in embodiments of this application with reference to the accompanying drawings in embodiments of this application.

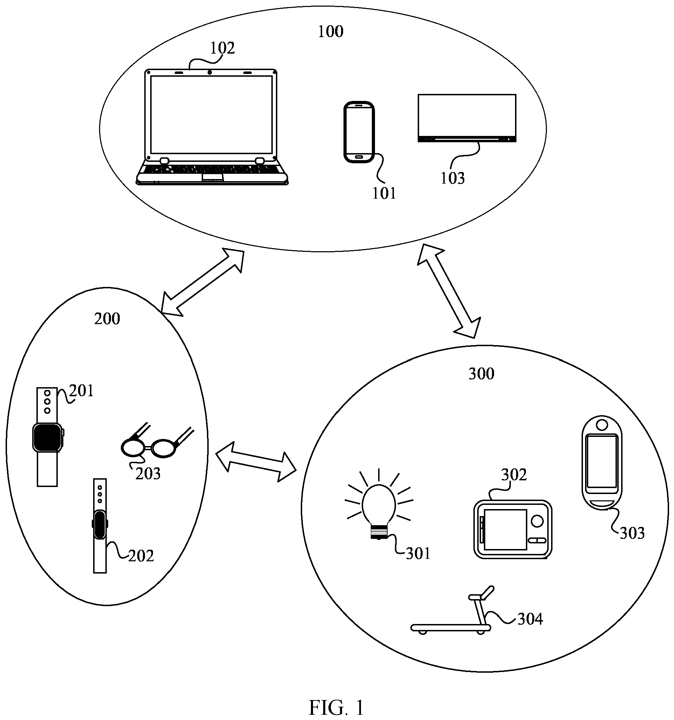

This application is mainly applied to a scenario in which a terminal device or a wearable device controls an auxiliary device. For example, as shown in FIG. 1, a terminal device 100 is wirelessly connected to and communicate with a wearable device 200. In addition, the terminal device 100 may further be wirelessly connected to and communicate with an auxiliary device 300. The wearable device 200 may also be wirelessly connected to and communicate with the auxiliary device 300. The wireless manner may be, for example, BR/EDR, BLE, Wi-Fi, and/or ZigBee (ZigBee). This is not limited in this application. The terminal device 100 may include, for example, a mobile phone 101, a personal computer (personal computer, PC) 102, and a television (television, TV) 103. The wearable device 200 may include, for example, a smart watch 201, a smart band 202, and smart glasses 203. The auxiliary device 300 may include, for example, a smart lamp 301, a smart blood pressure meter 302, a smart glucose meter 303, and a smart treadmill 304. It may be understood that the terminal device 100, the wearable device 200, and the auxiliary device 300 in this application are not limited to the foregoing examples. For example, the terminal device is the mobile phone 101. The mobile phone 101 is wirelessly connected to and communicates with the wearable device 200 and the auxiliary device 300.

Currently, the mobile phone 101 on the market provides only an APP that can manage the wearable device 200 and the auxiliary device 300 that are independently developed by a mobile phone manufacturer. Such an APP may also be directly connected to and communicate with only the wearable device 200 and the auxiliary device 300 that are independently developed. However, for another auxiliary device that is not independently developed, connection and communication cannot be performed through the APP. However, a current common practice is that a provider of an auxiliary device independently develops a dedicated APP, that is, a companion application (companion application, C-APP), and installs the dedicated APP in a terminal device, so that the terminal device is connected to and communicates with another auxiliary device that is not independently developed through the dedicated APP. When information needs to be summarized, the dedicated APP needs to first communicate with an APP provided by a mobile phone manufacturer, and transmit data to the APP provided by the mobile phone manufacturer, to summarize data of auxiliary devices of a plurality of different providers. However, obviously, an auxiliary device needs to develop a dedicated APP for the auxiliary device, resulting in excessively high development costs. In addition, a dedicated APP needs to be installed in the terminal device for each auxiliary device. As a result, a large amount of storage space on the terminal device is occupied. However, a user needs to switch between a plurality of different dedicated APPs, which seriously affects user experience.

Therefore, this application provides a method for managing an auxiliary device. A dedicated transceiver is configured on a terminal device, and then a dedicated transceiver corresponding to the auxiliary device is determined by identifying a device type of the auxiliary device. The dedicated transceiver is configured to communicate with the auxiliary device. In the foregoing manner, the terminal device can adapt to any auxiliary device, and dedicated APPs do not need to be deployed for different types of auxiliary devices.

The following describes in detail the technical solutions in embodiments of this application with reference to the accompanying drawings in embodiments of this application.

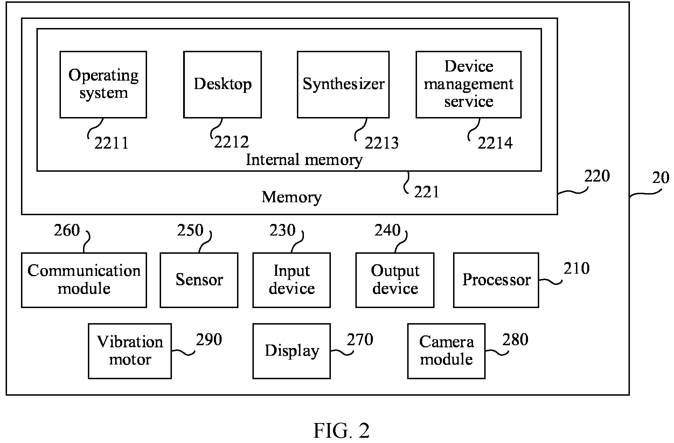

FIG. 2 is a schematic diagram of an architecture of an apparatus for managing an auxiliary device according to an embodiment of this application.

This application provides an apparatus 20 for managing an auxiliary device. It may be understood that the apparatus 20 may be a terminal device 100, or may be a wearable device 200. The apparatus 20 may include: a processor 210, a memory 220, an input device 230, an output device 240, a sensor 250, a communication module 260, a display 270, a camera module 280, and a vibration motor 290. Certainly, it may be understood that the apparatus 20 may further include any other peripheral device that may be required. This is not limited in this application.

The processor 210 may be a processor of an architecture such as an advanced reduced instruction set processor (advanced reduced instruction set computing machines, ARM), an X86 processor, or a microprocessor without interlocked piped stages (microprocessor without interlocked piped stages, MIPS). The memory 220 may include an internal memory 221. The internal memory 221 may store an operating system 2211, a desktop program 2212, a synthesizer 2213, and a device management service 2214. The memory 220 may further include a secondary memory or an external memory, for example, may be a non-removable memory or a removable memory card. The input device 230 may include, for example, a keyboard, a mouse, a key, and a touchscreen. The output device 240 may be an audio playback device, a printer, or the like. The sensor 250 may include a gravity sensor, an acceleration sensor, an angular velocity sensor, a photo plethysmo graph (photo plethysmo graph, PPG) sensor, a global positioning system (global positioning system, GPS) sensor, a fingerprint sensor, and the like. The communication module 260 may include an antenna, a Bluetooth module, a Wi-Fi module, a modem, and the like. The display 270 may be, for example, a liquid crystal display (liquid crystal display, LCD) screen, an organic light-emitting diode (organic light-emitting diode, OLED) screen, or an active-matrix organic light-emitting diode (active-matrix organic light-emitting diode, AMOLED) screen. The camera module 280 may include a front-facing camera, a rear-facing camera, a time of flight (time of flight, ToF) camera, an infrared camera, and the like. The vibration motor 290 may be, for example, a linear motor or an eccentric motor. Certainly, a specific representation form of each component in the foregoing device 20 may be randomly replaced based on an actual situation. This is not limited in this application.

The apparatus 20 runs, by using the processor 210, modules stored in the internal memory 221, to implement corresponding functions. In addition, various peripherals may be further invoked, to send and/or receive data, display corresponding information, and the like. It may be understood that the apparatus 20 may be various different devices such as a mobile phone, a PC, a tablet, a smart television, and a wearable device.

Because a unified device management service (unified device management service, UDMS) 2214 is newly added to the internal memory, connection and communication with various auxiliary devices can be implemented through the unified device management service 2214. In this way, the terminal device can adapt to any auxiliary device, and no dedicated APP needs to be deployed for different types of auxiliary devices.

The following describes this solution in more detail by using a software architecture of the device 20.

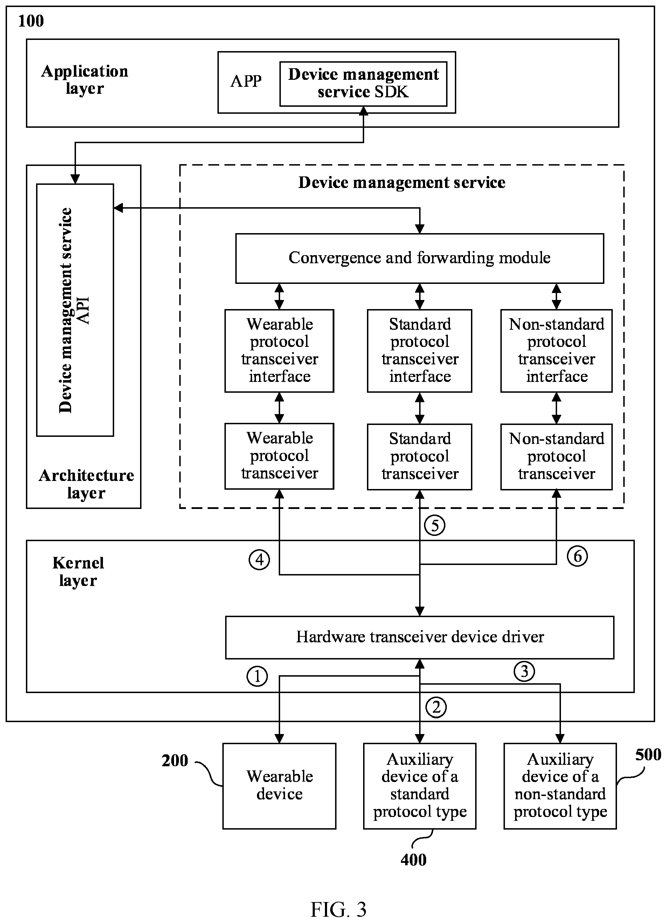

FIG. 3 is a schematic diagram of an architecture of a terminal device according to an embodiment of this application.

FIG. 3 shows an architecture of a terminal device 100. The architecture includes an application layer, a framework (framework) layer, a device management service, and a kernel layer. The application layer includes one or more APPs that may need to communicate with the wearable device 200 and the auxiliary device 300. In the APP, this application provides a pre-installed device management service SDK. The APP invokes a device management service application programming interface (application programming interface, API) at the framework layer through the device management service SDK, to invoke the device management service. In addition, this application further provides a device management service. The device management service may include a convergence and forwarding module and a dedicated transceiver. The dedicated transceiver may include a wearable device protocol transceiver, a standard protocol transceiver, and a non-standard protocol transceiver. It may be understood that the wearable device protocol transceiver, the standard protocol transceiver, and the non-standard protocol transceiver are configured to encode and decode received and sent messages. In addition, the wearable device protocol transceiver, the standard protocol transceiver, and the non-standard protocol transceiver further communicate with a hardware transceiver device driver located at the kernel layer, so that the hardware transceiver device driver drives a real physical transceiver. The real physical transceiver may be, for example, a BR/EDR transceiver, a BLE transceiver, a Wi-Fi transceiver, and/or a ZigBee transceiver, to receive, through a physical link, target data from the wearable device or sent by the auxiliary device. The physical link may be an air interface resource in any form. The non-standard protocol transceiver may exist in a form of a plug-in. It may be understood that, because a plug-in technology is used, installation and uninstallation operations of the plug-in further need to be defined.

It can be clearly learned from FIG. 3 that the wearable device protocol transceiver is configured to communicate with the wearable device 200, and communication paths between the wearable device protocol transceiver and the wearable device are shown in, for example, ① and ④. It may be understood that the wearable device protocol transceiver and the wearable device 200 communicate with each other jointly through the paths ① and ④. The wearable device 200 sends data to the terminal device 100, and the terminal device 100 receives the data through the hardware transceiver device driver, that is, the path ①. Then, the hardware transceiver device driver sends the received data to the wearable protocol transceiver, that is, the path ④, to complete communication between the wearable device 200 and the wearable protocol transceiver. Certainly, that the terminal device 100 sends the data to the wearable device 200 may be that the wearable protocol transceiver sends the data to the hardware transceiver device driver, that is, the path ④. Then, after receiving the data, the hardware transceiver device driver sends the data to the wearable device 200, that is, the path ①, to complete communication between the wearable protocol transceiver and the wearable device 200. The standard protocol transceiver is configured to communicate with an auxiliary device 400 of a standard protocol type, and communication paths between the standard protocol transceiver and the auxiliary device of the standard protocol type are shown in, for example, ② and ⑤. It may be understood that the standard protocol transceiver and the auxiliary device 400 of the standard protocol type communicate with each other jointly through the paths ② and ⑤. The auxiliary device 400 of the standard protocol type sends data to the terminal device 100, and the terminal device 100 receives the data through the hardware transceiver device driver, that is, the path ② . Then, the hardware transceiver device driver sends the received data to the standard protocol transceiver, that is, the path ⑤, to complete communication between the auxiliary device 400 of the standard protocol type and the standard protocol transceiver. Certainly, that the terminal device 100 sends the data to the auxiliary device 400 of the standard protocol type may be that the standard protocol transceiver sends the data to the hardware transceiver device driver, that is, the path ⑤. Then, after receiving the data, the hardware transceiver device driver sends the data to the auxiliary device 400 of the standard protocol type, that is, the path ②, to complete communication between the standard protocol transceiver and the auxiliary device 400 of the standard protocol type. The non-standard protocol transceiver is configured to communicate with an auxiliary device 500 of a non-standard protocol type, and communication paths between the non-standard protocol transceiver and the auxiliary device of the non-standard protocol type are shown in, for example, ③ and ⑥. It may be understood that the non-standard protocol transceiver and the auxiliary device 500 of the non-standard protocol type communicate with each other jointly through the paths ③ and ⑥. The auxiliary device 500 of the non-standard protocol type sends data to the terminal device 100, and the terminal device 100 receives the data through the hardware transceiver device driver, that is, the path ③. Then, the hardware transceiver device driver sends the received data to the non-standard protocol transceiver, that is, the path ⑥, to complete communication between the auxiliary device 500 of the non-standard protocol type and the standard protocol transceiver. Certainly, that the terminal device 100 sends the data to the auxiliary device 500 of the non-standard protocol type may be that the non-standard protocol transceiver sends the data to the hardware transceiver device driver, that is, the path . Then, after receiving the data, the hardware transceiver device driver sends the data to the auxiliary device 500 of the non-standard protocol type, that is, the path ③, to complete communication between the non-standard protocol transceiver and the auxiliary device 500 of the non-standard protocol type. The auxiliary device 400 of the standard protocol type and the auxiliary device 500 of the non-standard protocol type may be the auxiliary device 300 shown in FIG. 1. In other words, the auxiliary device 300 may include the auxiliary device 400 of the standard protocol type, or may include the auxiliary device 500 of the non-standard protocol type.

In an example, the standard protocol type may be a GATT type. This GATT type falls within the scope of a standard Bluetooth protocol. Certainly, it may be understood that a protocol of another wireless connection, for example, Wi-Fi or ZigBee, may alternatively be used as a standard protocol type. This is not limited in this application. In an example, the GATT type may be a blood pressure meter protocol (blood pressure), a body composition protocol (body composition), a blood glucose protocol (glucose), a heart rate protocol (heart rate), or the like. In this application, that Bluetooth is used as a wireless connection manner is used as an example. Certainly, another equivalent wireless connection manner may also be used for replacement. This is not limited in this application.

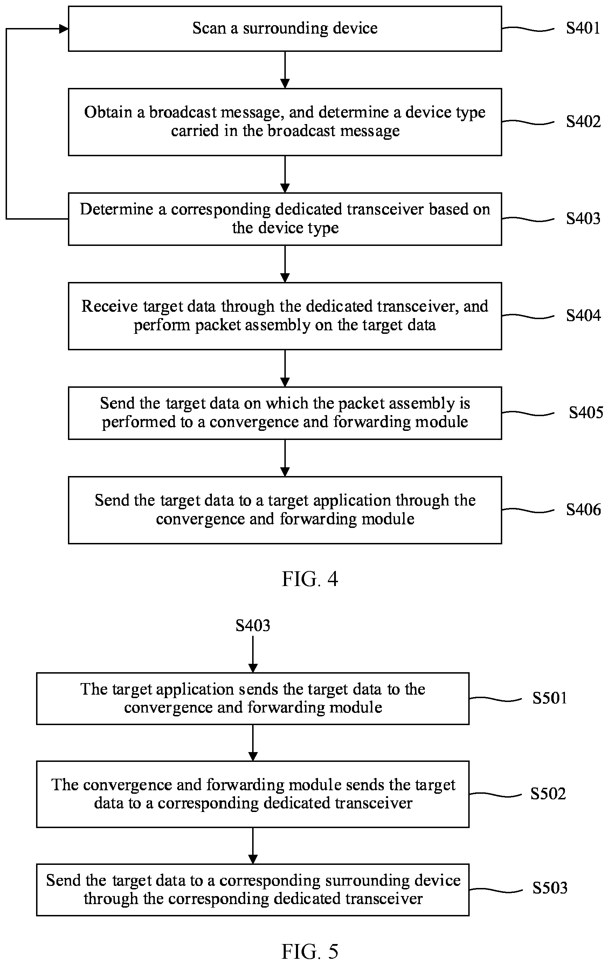

That the terminal device 100 in FIG. 3 communicates with the wearable device 200, the auxiliary device 400 of the standard protocol type, and/or the auxiliary device 500 of the non-standard protocol type is described with reference to FIG. 4. FIG. 4 is a flowchart of a method for managing an auxiliary device according to an embodiment of this application. The method may be applied to the terminal device 100 shown in FIG. 3, and the method may include the following steps.

S401: Scan a surrounding device.

The terminal device needs to enable Bluetooth and scan the surrounding device.

In an example, if the APP at the application layer needs to communicate with the surrounding wearable device 200 or the surrounding auxiliary device 300, the terminal device 100 may continuously scan the surrounding device through a universal transceiver, to discover the surrounding wearable device 200 or the surrounding auxiliary device 300. It may be understood that the universal transceiver may drive a physical Bluetooth antenna to receive a broadcast message sent by the wearable device 200 or the auxiliary device 300.

In some examples, the wearable device 200 or the auxiliary device 300 needs to send a broadcast message in a broadcast manner before the wearable device 200 or the auxiliary device 300 is paired with and is connected to the terminal device 100.

S402: Obtain a broadcast message, and determine a device type carried in the broadcast message.

The terminal device 100 obtains, through the universal transceiver, the broadcast message sent by the surrounding device. In an example, after receiving the broadcast message sent by the wearable device 200 or the auxiliary device 300, the terminal device 100 parses the obtained broadcast message to obtain carried device information. The device information may include, for example, the device type. In an example, a representation form of the device type may be a device type identity (identity, ID) identifier.

S403: Determine a corresponding dedicated transceiver based on the device type.

The terminal device 100 may determine, based on a preset device type and dedicated transceiver correspondence, a dedicated transceiver corresponding to the device type obtained through parsing, and communicate with the surrounding wearable device 200 or the surrounding auxiliary device 300 through the corresponding dedicated transceiver.

In an example, the device type may include a wearable device type, a standard protocol type, and a non-standard protocol type. It may be understood that, when a device that sends the broadcast message is the wearable device 200, the device type carried in the broadcast message may be the wearable device type. When a device that sends the broadcast message is the auxiliary device 400 of the standard protocol type, the device type carried in the broadcast message may be the standard protocol type. When a device that sends the broadcast message is the auxiliary device 500 of the non-standard protocol type, the device type carried in the broadcast message may be the non-standard protocol type. Then, the terminal device 100 determines, based on the preset device type and dedicated transceiver correspondence, the dedicated transceiver corresponding to the device type. For example, when the device type is the wearable device type, a wearable protocol transceiver is selected as the corresponding dedicated transceiver. When the device type is the standard protocol type, a standard protocol transceiver is selected as the corresponding dedicated transceiver. When the device type is the non-standard protocol type, a non-standard protocol transceiver is selected as the corresponding dedicated transceiver.

It may be understood that a pairing process between the surrounding wearable device 200 or the surrounding auxiliary device 300 and the terminal device 100 is completed in S401 to S403.

In some examples, after being successfully paired with a wearable device 200 or an auxiliary device 300, the terminal device may continue to perform S401 to continuously perform scanning, to pair with a new wearable device 200 or a new auxiliary device 300. Therefore, a pairing process between the terminal device and the surrounding may be considered as a cycle. In an example, a specific representation form of the cycle may be an independent thread or an independent process.

After S403, S404 may continue to be performed for the wearable device 200 or auxiliary device 300 that is successfully paired. Certainly, it may be understood that S401 and S404 that are performed after S403 may be performed synchronously, and do not affect each other.

S404: Receive target data through the dedicated transceiver, and perform packet assembly on the target data.

The terminal device receives the target data through the dedicated transceiver corresponding to the surrounding wearable device 200 or the surrounding auxiliary device 300 that is paired. For example, after detecting air interface data, that is, the target data, an actual physical transceiver sends the corresponding target data to the corresponding dedicated transceiver, so that the corresponding dedicated transceiver receives the data.

In an example, if the surrounding device that is successfully paired is the wearable device 200, the wearable protocol transceiver is selected to receive data sent by the wearable device 200, that is, the communication path shown in ① in FIG. 3. Then, the wearable protocol transceiver performs decoding and packet assembly on the received target data. It may be understood that, in a wireless transmission process, a size of a data packet to be transmitted is usually fixed. When data that needs to be transmitted is large, a plurality of data packets need to be used for transmission, so that complete data can be transmitted to another device. Therefore, the wearable protocol transceiver of the terminal device 100 needs to parse the received target data and perform packet assembly on the received target data.

Certainly, in another example, if the surrounding device that is successfully paired is the auxiliary device 400 of the standard protocol type, the standard protocol transceiver is selected to receive data sent by the auxiliary device 400 of the standard protocol type, that is, the communication path shown in ② in FIG. 3. Then, the standard protocol transceiver performs decoding and packet assembly on the received target data. In still another example, if the device that is successfully paired is the auxiliary device 500 of the non-standard protocol type, the non-standard protocol transceiver is selected to receive data sent by the auxiliary device 500 of the non-standard protocol type, that is, the communication path shown in ③ in FIG. 3. Then, the non-standard protocol transceiver performs decoding and packet assembly on the received target data. It may be understood that, when data is wirelessly transmitted across devices, the transmitted data may be encrypted. Therefore, a decoding process is a process of decrypting the encrypted data. Certainly, if the transmitted data is not encrypted, the decoding process may be skipped and packet assembly may be directly performed. This is not limited in this application.

In an example, for the target data on which the packet assembly is performed, S404 is continuously performed, to receive new target data and perform decoding and packet assembly on the new target data. After the packet assembly is performed on the target data is, S405 is performed.

Certainly, in a process of performing S404, if the target data is not received in a period of time, the dedicated transceiver continues to wait for the target data reported by hardware.

S405: Send the target data on which the packet assembly is performed to a convergence and forwarding module.

After receiving the target data through the corresponding dedicated transceiver and completing packet assembly, the terminal device 100 may send the target data on which the packet assembly is performed to the convergence and forwarding module. In an example, the dedicated transceiver may send, through a transceiver interface corresponding to the dedicated transceiver, the target data on which the packet assembly is performed to the convergence and forwarding module. For example, the wearable protocol transceiver may send, through a wearable protocol transceiver interface, the target data on which the packet assembly is performed to the convergence and forwarding module. The standard protocol transceiver may send, through a standard protocol transceiver interface, the target data on which the packet assembly is performed to the convergence and forwarding module. The non-standard protocol transceiver may send, through a non-standard protocol transceiver interface, the target data on which the packet assembly is performed to the convergence and forwarding module. It may be understood that the convergence and forwarding module needs to communicate with different dedicated transceivers through the interfaces.

In an example, the wearable device 200 mentioned in this application may be a wearable device independently developed by a mobile phone manufacturer. Both a device provider and a service provider of such a wearable device are a same provider. Therefore, communication can be performed by using an internally defined communication protocol. Therefore, the wearable protocol transceiver only needs to perform decoding and packet assembly on the received target data, and then the wearable protocol transceiver interface forwards the target data on which the packet assembly is performed to the convergence and forwarding module. The wearable protocol transceiver does not need to perform protocol format conversion on the target data.

In another example, for the auxiliary device 400 of the standard protocol type, because the transmitted target data is in a preset standard protocol format, the standard protocol transceiver does not need to perform protocol format conversion on the received target data, directly performs parsing and packet assembly on the target data, and forwards, through the standard protocol transceiver interface, the target data on which the packet assembly is performed to the convergence and forwarding module.

In still another example, for the auxiliary device 500 of the non-standard protocol type, a format type used for the transmitted target data is not the standard protocol format preset in this application. Therefore, the non-standard protocol transceiver needs to first decode the received data, convert data in a non-standard protocol format into the target data in the standard protocol format, and then perform packet assembly on the converted target data in the standard protocol format. Then, the target data on which the packet assembly is performed is forwarded to the convergence and forwarding module through the non-standard protocol transceiver interface. In some examples, due to some uncontrollable factors, the non-standard protocol transceiver may not convert all data in the non-standard protocol format into the target data in the standard protocol format. Therefore, when forwarding is performed through the non-standard protocol transceiver interface, forwarded data may be checked again, data whose protocol format is still the non-standard protocol format is selected, and protocol format conversion is performed on the selected data in the non-standard protocol format, to obtain the corresponding target data in the standard protocol format. It may be understood that, the non-standard protocol transceiver interface is not only used to forward the target data, but also needs to check the forwarded data, and perform protocol format conversion on the data on which the protocol format conversion is not performed in time, to avoid a case that the data on which the protocol format conversion is not performed cannot be correctly read subsequently.

In some examples, there may be a plurality of data packets of the target data. Therefore, after packet assembly is performed on one data packet of the target data, S404 may further continue to be performed to receive new target data, to form a data sending and receiving cycle. It may be understood that a specific representation form of the data receiving and sending cycle may be an independent thread or an independent process.

S406: Send the target data to a registered APP through the convergence and forwarding module.

After receiving the target data, the convergence and forwarding module may determine, based on a preset target application and target data relationship, to forward the target data to a corresponding target application.

In an example, before S406, the APP may notify, through registration, the terminal device 100 of which type of target data the APP expects to obtain. Therefore, the terminal device 100 may establish a correspondence between the registered APP and the target data that the APP expects to obtain. The correspondence may be stored in the terminal device 100 in a form of a table. Certainly, in some examples, the correspondence may be stored in any equivalent form. This is not limited in this application. In this case, the registered APP is the target application corresponding to the target data.

In an example, a device management service SDK is pre-installed in the target application, and the target application communicates with a device management service API at the framework layer through the built-in device management service SDK, to invoke the device management service through the device management service API. That is, the target data sent by the convergence and forwarding module is received through the device management service API.

In still some examples, the preset target application and target data relationship may further include a data form expected to be received by the target application, for example, a basic type, a combination type, or a sequence type. In this way, the convergence and forwarding module may select appropriate data and send the data to the target application. It may be understood that one or more instances may run in the target application, and the convergence and forwarding module may directly send the target data to a corresponding instance in the target application through the device management service API and then through the device management service SDK.

Certainly, in some examples, there may be no target application in the terminal device 100. In this case, the convergence and forwarding module may directly discard the target data.

Until now, the entire process of reporting the target data from the wearable device 200 or the auxiliary device 300 to the target application is completed in S404 to S406.

FIG. 5 is a flowchart of another method for managing an auxiliary device according to an embodiment of this application.

FIG. 5 shows another method for managing an auxiliary device. With reference to FIG. 3, the method describes a process of delivering the target data from the target application to the corresponding wearable device 200 or the corresponding auxiliary device 300. After S403, the method may further include the following steps.

S501: The target application sends the target data to the convergence and forwarding module.

The target application in the terminal device 100 may send the target data to the convergence and forwarding module.

In an example, when the target application, that is, the registered APP, needs to send the target data to a surrounding device that is successfully paired with the terminal device 100, the target application may send the target data to the convergence and forwarding module. For example, the target application sends the target data to the convergence and forwarding module through the pre-installed device management service SDK. In an example, when the device management service SDK sends the target data to the convergence and forwarding module, the target data can be sent to the convergence and forwarding module of the device management service only through the device management service API at the framework layer.

S502: The convergence and forwarding module sends the target data to a corresponding dedicated transceiver.

After receiving the target data from the target application, the convergence and forwarding module sends the target data to the dedicated transceiver based on the dedicated transceiver determined in S403.

In an example, if the dedicated transceiver determined in S403 is the wearable protocol transceiver, the convergence and forwarding module sends the target data to the wearable protocol transceiver through the wearable protocol transceiver interface. Certainly, in another example, if the dedicated transceiver determined in S403 is the standard protocol transceiver, the convergence and forwarding module sends the target data to the standard protocol transceiver through the standard protocol transceiver interface. In still another example, if the dedicated transceiver determined in S403 is the non-standard protocol transceiver, the convergence and forwarding module sends the target data to the non-standard protocol transceiver through the non-standard protocol transceiver interface.

S503: Send the target data to a corresponding surrounding device through the corresponding dedicated transceiver.

After receiving the target data, the dedicated transceiver in the terminal device sends the target data to the corresponding surrounding device.

In an example, if the dedicated transceiver is the wearable protocol transceiver, the corresponding surrounding device may be the wearable device 200, and a communication path for sending the target data may be shown in ① in FIG. 3. If the dedicated transceiver is the standard protocol transceiver, the corresponding surrounding device may be the auxiliary device 400 of the standard protocol type, and a communication path for sending the target data may be shown in ② in FIG. 3. If the dedicated transceiver is the non-standard protocol transceiver, the corresponding surrounding device may be the auxiliary device 500 of the non-standard protocol type, and a communication path for sending the target data may be shown in ③ in FIG. 3.

It may be understood that, for the wearable device 200 mentioned in this application, communication is performed by using the internally defined communication protocol. Therefore, the wearable protocol transceiver may directly send the target data to the wearable device 200 without performing protocol format conversion on the target data. Certainly, in some other examples, because a used format type of the target data sent to the standard protocol transceiver is a preset standard protocol format, the standard protocol transceiver does not need to perform protocol format conversion on the target data, and directly sends the target data to the auxiliary device 400 of the standard protocol type.

In some examples, a used format type of the target data sent to the non-standard protocol transceiver is not the preset standard protocol format in this application. Therefore, the non-standard protocol transceiver needs to perform protocol format conversion on the target data, to obtain corresponding data in a non-standard protocol format. Then, the data in the non-standard protocol format is sent to the corresponding auxiliary device 500 of the non-standard protocol type.

In some examples, the dedicated transceiver may further encrypt the sent target data or the data in the non-standard protocol format, and an encryption process may also be referred to as an encoding process. Certainly, the dedicated transceiver may alternatively directly send the target data or the data in the non-standard protocol format to the corresponding surrounding device without encryption. This is not limited in this application.

It may be understood that the non-standard protocol transceivers described in FIG. 3 to FIG. 5 may be developed by each manufacturer of the auxiliary device 500 of the non-standard protocol type. Therefore, for each different auxiliary device 500 of a non-standard protocol type, there may be a corresponding non-standard protocol transceiver. For example, if a manufacturer A produces an auxiliary device of a protocol type A, and a manufacturer B produces an auxiliary device of a protocol type B, in this case, a non-standard protocol transceiver 1 corresponding to the auxiliary device of the protocol type A and a non-standard protocol transceiver 2 corresponding to the auxiliary device of the protocol type B need to exist in the terminal device 100. In another example, if the manufacturer A produces a plurality of different auxiliary devices of the protocol type A, only a non-standard protocol transceiver 1 corresponding to one auxiliary device of the protocol type A needs to be deployed in the terminal device 100, and a plurality of same non-standard protocol transceivers do not need to be deployed.

The auxiliary device of the standard protocol type described in FIG. 3 to FIG. 5 may be a GATT device. Because a standard protocol is used, provided that it is ensured that the connected auxiliary device 400 of the standard protocol type meets a GATT compatibility requirement, the terminal device can directly perform communication through the standard protocol transceiver, that is, a GATT protocol transceiver.

In addition, in an example, the target data described in FIG. 3 to FIG. 5 may be an operation instruction or parameter data. The operation instruction is used to control a peer end to perform a corresponding operation. For example, if the target application in the terminal device 100 sends an instruction, the wearable device 200 or the auxiliary device 300 connected to the terminal device is the peer end. If the wearable device 200 or the auxiliary device 300 sends an instruction, the terminal device 100 is the peer end. The parameter data may be, for example, any parameter that may be collected by the wearable device 200 or the auxiliary device 300, for example, blood oxygen data, blood glucose data, blood pressure data, heart rate data, a quantity of walking steps, temperature data, and humidity data that are collected by the device. It may be understood that the parameter data may further include a corresponding parameter unit.

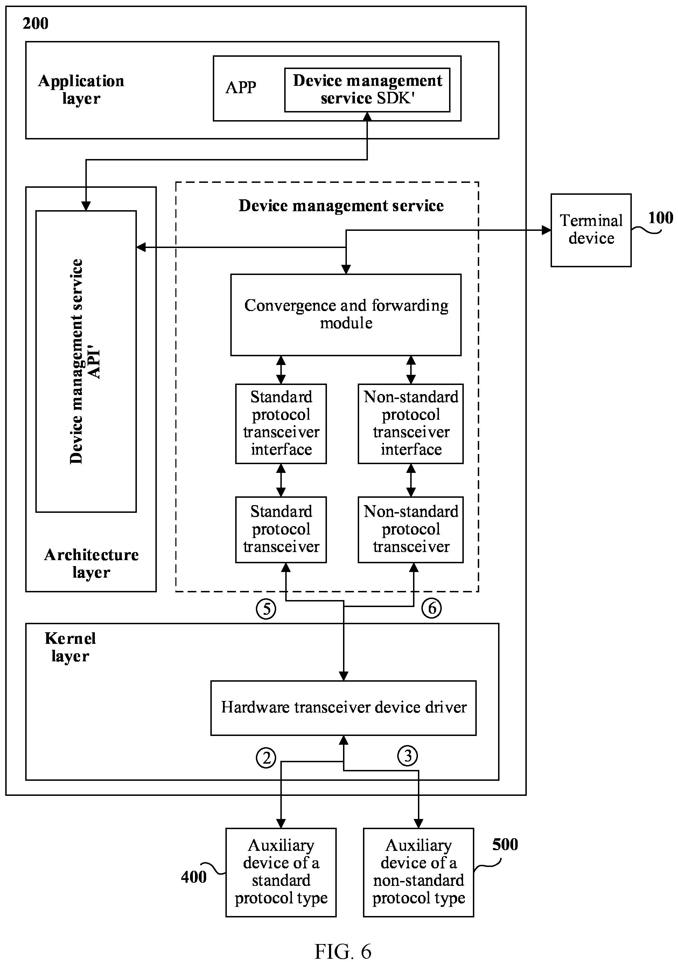

FIG. 6 is a schematic diagram of an architecture of a wearable device according to an embodiment of this application.

FIG. 6 mainly shows an architecture of the wearable device 200. It can be learned that a main difference between the architecture of the wearable device and the architecture of the terminal device 100 in FIG. 3 lies in that the wearable device 200 does not need to configure the wearable protocol transceiver. In addition, the convergence and forwarding module of the wearable device 200 may forward the target data to the terminal device 100.

In an example, the wearable device 200 may alternatively be paired with and communicate with the auxiliary device 300. A specific implementation is similar to the manner in which the terminal device 100 is paired with and communicates with the auxiliary device 300. For details, refer to the corresponding descriptions in FIG. 3 to FIG. 5. Details are not described herein again.

A difference from the terminal device 100 is that after the convergence and forwarding module receives the target data and determines that the target data is to be forwarded to the corresponding target application, the convergence and forwarding module further needs to determine that the target application is a target application of the wearable device 200 or a target application of the terminal device 100.

In an example, if the convergence and forwarding module determines that the target application is the target application of the wearable device 200, an implementation is similar to the implementation in which the terminal device sends the target data to the target application. For details, refer to the corresponding descriptions in FIG. 3 to FIG. 5. Details are not described herein again.

In another example, if the convergence and forwarding module determines that the target application is the target application of the terminal device 100, in this case, the convergence and forwarding module of the wearable device 200 sends the target data to the terminal device 100. The terminal device 100 may receive, through the wearable protocol transceiver, the target data sent by the wearable device 200, and then send the target data to the target application of the terminal device 100 through the convergence and forwarding module of the terminal device 100. For a specific data forwarding process in the terminal device 100, refer to the corresponding descriptions in FIG. 3 to FIG. 5. Details are not described herein again.

In another example, when the terminal device 100 sends the target data to the wearable device 200, the convergence and forwarding module of the wearable device 200 may receive the target data sent by the terminal device 100, and determine a destination address included in the target data. If the destination address is the wearable device 200, the convergence and forwarding module of the wearable device 200 may forward the target data to a corresponding application at the application layer through the device management service API at the framework layer. Specifically, the target data may be received through a device management service SDK preset in the corresponding application. Certainly, in still some examples, if the destination address is the auxiliary device 300, that is, the auxiliary device 400 of the standard protocol type or the auxiliary device 500 of the non-standard protocol type, connected to the wearable device 200, in this case, the convergence and forwarding module of the wearable device 200 may send the target data to a corresponding dedicated transceiver through a corresponding transceiver interface, and then send the target data to the corresponding auxiliary device 300 through the dedicated transceiver. For a specific implementation process, refer to the process in which the terminal device 100 sends the data to the auxiliary device 300, and refer to the corresponding descriptions in FIG. 3 to FIG. 5. Details are not described herein again.

According to the solutions described in FIG. 3 to FIG. 6, in this application, connection and communication between the terminal device and the wearable device and the auxiliary device, and connection and communication between the wearable device and the auxiliary device may be supported. In addition, for the terminal device and the wearable device, connection and communication between the devices can be completed without deploying a C-APP of a specific device for each type of connected device.

In addition, for some existing solutions, for example, some super APPs such as a fitness and health APP and a smart home APP are deployed, all connected auxiliary devices and wearable devices are managed through such super APPs, and data communication, protocol adaptation, and the like are performed. However, because a large quantity of auxiliary devices of a non-standard protocol may be connected, function coupling may be caused, and it is difficult to connect new auxiliary devices. Therefore, in the solution in this application, a specific APP does not need to be installed, and the unified device management service in this application can be invoked only when a device management service SDK needs to be pre-installed in each target application that needs to use the target data. This increases convenience, and does not need to consider a function coupling problem, thereby greatly reducing connection difficulty of an auxiliary device of a non-standard protocol type.

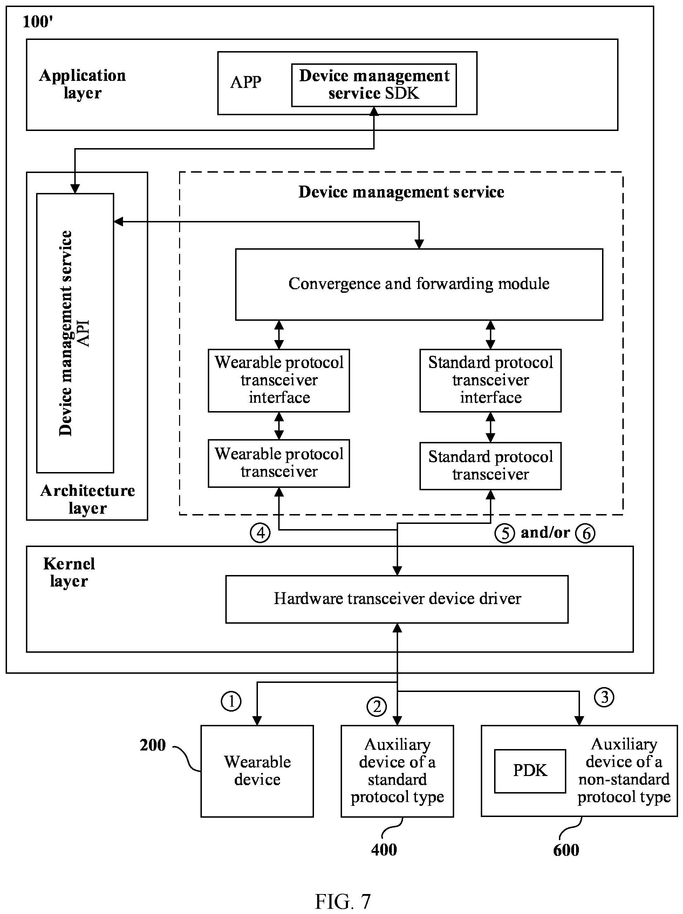

FIG. 7 is a schematic diagram of an architecture of another terminal device according to an embodiment of this application.

As shown in FIG. 7, this application further provides a schematic diagram of an architecture of another terminal device. Compared with the terminal device 100 shown in FIG. 3, a terminal device 100' shown in FIG. 7 does not need to configure a non-standard protocol transceiver and a non-standard protocol transceiver interface. The terminal device 100' is connected to and communicates with an auxiliary device 400 of a standard protocol type and/or an auxiliary device 600 of a non-standard protocol type through a standard protocol transceiver.

It can be learned that, a difference between the auxiliary device 600 of the non-standard protocol type in FIG. 7 and the auxiliary device 500 of the non-standard protocol type in FIG. 3 lies in that a PDK is pre-configured in the auxiliary device 600 of the non-standard protocol type. The PDK is mainly configured to perform protocol format conversion on data that is in a non-standard protocol format and that needs to be sent by the auxiliary device 600 of the non-standard protocol type, to obtain target data in a standard protocol format. Then, the target data in the standard protocol format is sent to the terminal device 100', so that the standard protocol transceiver of the terminal device 100' receives the target data.

In addition, the PDK is further configured to perform protocol format conversion on target data delivered by the terminal device 100'. For example, protocol format conversion is performed on the target data in the standard protocol format delivered by the terminal device 100', to obtain data in a non-standard protocol format, so that the auxiliary device 600 of the non-standard protocol type can correctly read and use the data in the non-standard protocol format.

In an example, the PDK may be a stub kit (stub kit, SK) deployed on the auxiliary device 600 of the non-standard protocol type, and is mainly configured to perform protocol format conversion between the data in the non-standard protocol format on the auxiliary device 600 of the non-standard protocol type and the target data in the standard protocol format. The SK may exist in a form of a plug-in. It may be understood that, because a plug-in technology is used, installation and uninstallation operations of the plug-in further need to be defined.

It may be understood that, for a process in which the terminal device 100' is paired with and is connected to the wearable device 200 and the auxiliary device 400 of the standard protocol type and communicates with the wearable device and the auxiliary device of the standard protocol type, refer to the corresponding descriptions in FIG. 3 to FIG. 5. Details are not described herein again in this application. For a process in which the terminal device 100' is paired with and is connected to the auxiliary device 600 of the non-standard protocol type and communicates with the auxiliary device of the non-standard protocol type, refer to the descriptions in which the terminal device 100' is paired with and is connected to the auxiliary device 400 of the standard protocol type in FIG. 3 to FIG. 5. Details are not described herein again in this application.

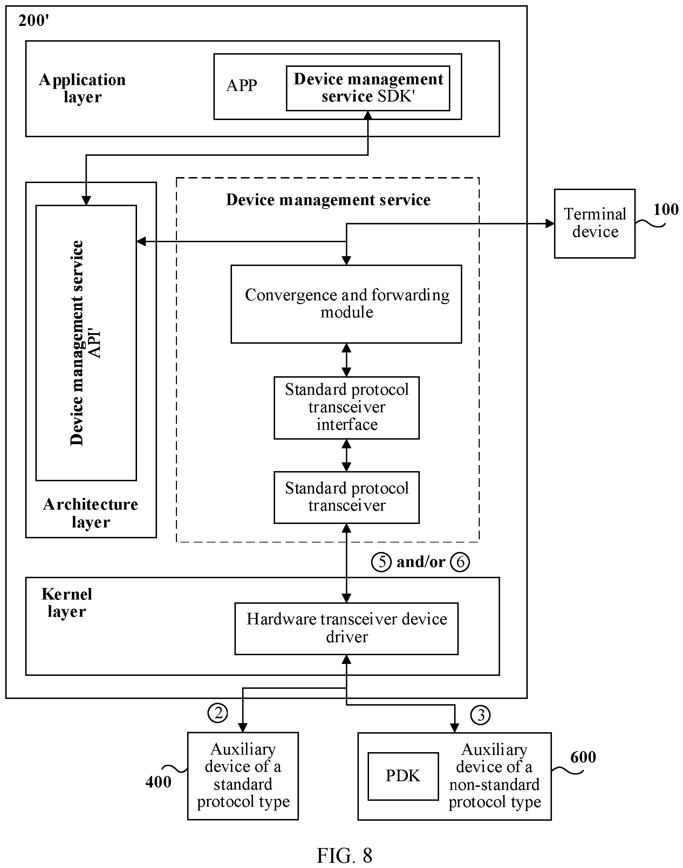

FIG. 8 is a schematic diagram of an architecture of another wearable device according to an embodiment of this application.

As shown in FIG. 8, this application further provides a schematic diagram of an architecture of another wearable device. Compared with the wearable device 200 shown in FIG. 6, a wearable device 200' shown in FIG. 8 does not need to configure a non-standard protocol transceiver and a non-standard protocol transceiver interface. The wearable device 200' is connected to and communicates with an auxiliary device 400 of a standard protocol type and/or an auxiliary device 600 of a non-standard protocol type through a standard protocol transceiver.

It may be understood that, for a process in which the wearable device 200' is paired with and is connected to the auxiliary device 400 and the auxiliary device 600 of the standard protocol type and communicates with the auxiliary device of the standard protocol type and the auxiliary device of the non-standard protocol type, refer to the corresponding description in the terminal device 100' in FIG. 7. Details are not described herein again in this application.

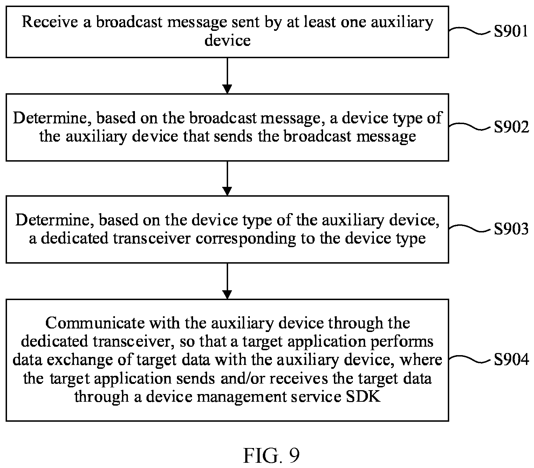

It can be learned that the terminal device 100' and the wearable device 200' shown in FIG. 8 and FIG. 9 can adapt to any wearable device and/or auxiliary device without deploying the non-standard protocol transceiver and the non-standard protocol transceiver interface. The originally deployed non-standard protocol transceiver is replaced with a PDK that is deployed on the auxiliary device 600 of the non-standard protocol type, so that data sent by the auxiliary device 600 of the non-standard protocol type is the target data in the standard protocol format. For the terminal device 100' and the wearable device 200', it is equivalent to reconstructing the auxiliary device 600 of the non-standard protocol type into the auxiliary device 400 of the standard protocol type. Therefore, it may be understood that, compared with that a quantity of non-standard protocol transceivers that need to be deployed is uncertain in the solutions shown in FIG. 3 and FIG. 6, a type of a transceiver that needs to be deployed in the solutions shown in FIG. 8 and FIG. 9 is fixed. Therefore, it is more convenient to connect the auxiliary device of the non-standard protocol type.

FIG. 9 is a flowchart of another method for managing an auxiliary device according to an embodiment of this application.

This application provides a method for managing an auxiliary device. The method may be applied to the terminal device or the wearable device in FIG. 3, FIG. 6, FIG. 7, and FIG. 8. The terminal device or the wearable device may include a target application, and a device management service SDK is configured in the target application. The method may include the following steps.

S901: Receive a broadcast message sent by at least one auxiliary device.

S902: Determine, based on the broadcast message, a device type of the auxiliary device that sends the broadcast message.

S903: Determine, based on the device type of the auxiliary device, a dedicated transceiver corresponding to the device type.

In an example, the device type may include: a standard device type and a first non-standard device type. The dedicated transceiver may include: a standard protocol transceiver. The standard protocol transceiver is a dedicated transceiver corresponding to an auxiliary device of the standard device type and an auxiliary device of the first non-standard device type. It may be understood that the auxiliary device of the first non-standard device type is the auxiliary device 600 of the non-standard protocol type shown in FIG. 7 and FIG. 8.

In an example, the auxiliary device of the first non-standard device type includes a PDK.

In an example, the device type may include: a second non-standard device type. The dedicated transceiver may include: a non-standard protocol transceiver. The non-standard protocol transceiver is a dedicated transceiver corresponding to an auxiliary device of the second non-standard device type. It may be understood that the auxiliary device of the second non-standard device type is the auxiliary device 500 of the non-standard protocol type shown in FIG. 3 and FIG. 6.

In an example, if the method is applied to the terminal device, the device type may further include: a wearable device type. The dedicated transceiver may further include: a wearable protocol transceiver. The wearable protocol transceiver is a dedicated transceiver corresponding to an auxiliary device of the wearable device type.

S904: Communicate with the auxiliary device through a dedicated transceiver, so that the target application performs data exchange of target data with the auxiliary device. The target application sends and/or receives the target data through a device management service SDK.

In an example, the target data sent by the auxiliary device of the first non-standard device type may be received through the standard protocol transceiver. The target data is target data determined by the auxiliary device of the first non-standard device type by performing protocol format conversion through the PDK.

In an example, protocol format conversion may be performed, through the non-standard protocol transceiver, on data that is in a non-standard protocol format and that is received from the auxiliary device of the second non-standard device type, to obtain the target data. Then, the protocol format conversion may be further performed, through the non-standard protocol transceiver, on the target data sent to the auxiliary device of the second non-standard device type, to obtain the data in the non-standard protocol format.

In another example, the target data sent to and received by the non-standard protocol transceiver may be further checked through a non-standard protocol transceiver interface, and a protocol format of the data in the non-standard protocol format in the target data is converted to a standard protocol format.

In an example, the target data may include: an operation instruction and/or parameter data.

In an example, the target data may be target data in a standard protocol format, and the standard protocol format may be a GATT format.

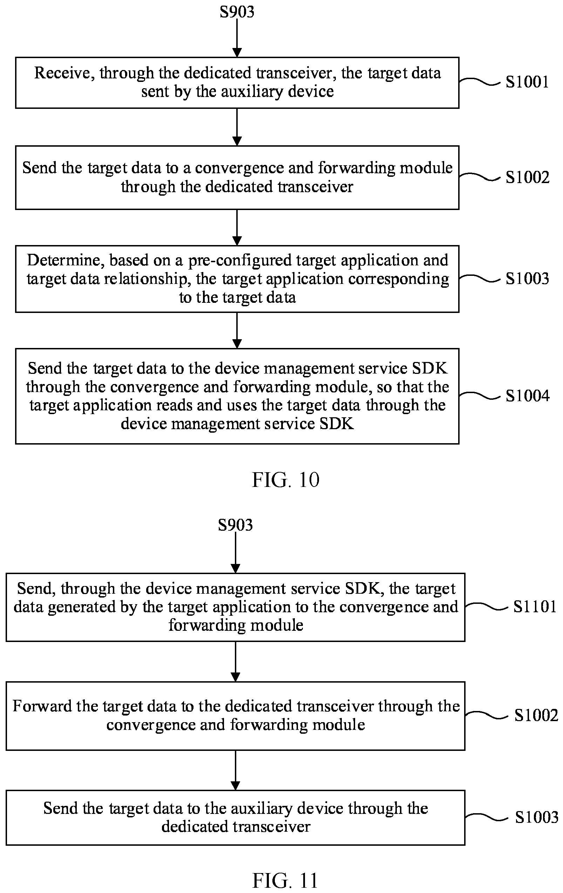

FIG. 10 is a flowchart of still another method for managing an auxiliary device according to an embodiment of this application.

This application further provides a flowchart of still another method for managing an auxiliary device. For S904 in FIG. 9, a specific step in which the dedicated transceiver receives the target data sent by the auxiliary device may be as follows.

S1001: Receive, through the dedicated transceiver, the target data sent by the auxiliary device.

S1002: Send the target data to a convergence and forwarding module through the dedicated transceiver.

S1003: Determine, based on a pre-configured target application and target data relationship, the target application corresponding to the target data.

S1004: Send the target data to the device management service SDK through the convergence and forwarding module, so that the target application reads and uses the target data through the device management service SDK.

In an example, if the method is applied to the wearable device, before S1004, it may be further determined that the target application is a target application of the terminal device or a target application of the wearable device. Then, when the target application is the target application of the terminal device, the target data is sent to the terminal device.

FIG. 11 is a flowchart of still another method for managing an auxiliary device according to an embodiment of this application.

This application further provides a flowchart of still another method for managing an auxiliary device. For S904 in FIG. 9, a specific step in which the dedicated transceiver sends the target data to the auxiliary device may be as follows.

S1101: Send, through the device management service SDK, the target data generated by the target application to the convergence and forwarding module.

S1102: Forward the target data to the dedicated transceiver through the convergence and forwarding module.

S1103: Send the target data to the auxiliary device through the dedicated transceiver.

It may be understood that, for a specific implementation process of the methods described in FIG. 9 to FIG. 11, refer to the corresponding descriptions in FIG. 3 to FIG. 8. Details are not described herein again.

According to FIG. 3 to FIG. 11, this application provides the method and the apparatus for managing an auxiliary device, and the auxiliary device. By using a unified device management service deployed on a mobile phone and a device management service SDK deployed in a corresponding target application, the terminal device is paired with and communicates with any wearable device or auxiliary device. This is also the case for the wearable device. The wearable device may also communicate with any auxiliary device by deploying a unified device management service and a device management service SDK in a corresponding target application. By using a dedicated transceiver included in the unified device management service, communication may be separately performed for a wearable device that is independently developed, an auxiliary device that complies with a GATT protocol, and an auxiliary device produced by any other manufacturer. In addition, data is transmitted to the convergence and forwarding module through a corresponding interface, to forward the data to a corresponding APP at the APP layer.

This application resolves a problem of managing a wearable device and an auxiliary device on a terminal device and communicating with these devices. In this way, the terminal device and the wearable device in this application do not need to separately install a C-APP for each type of managed device, thereby simplifying development and deployment work, and saving resources required for development and deployment of the C-APP.

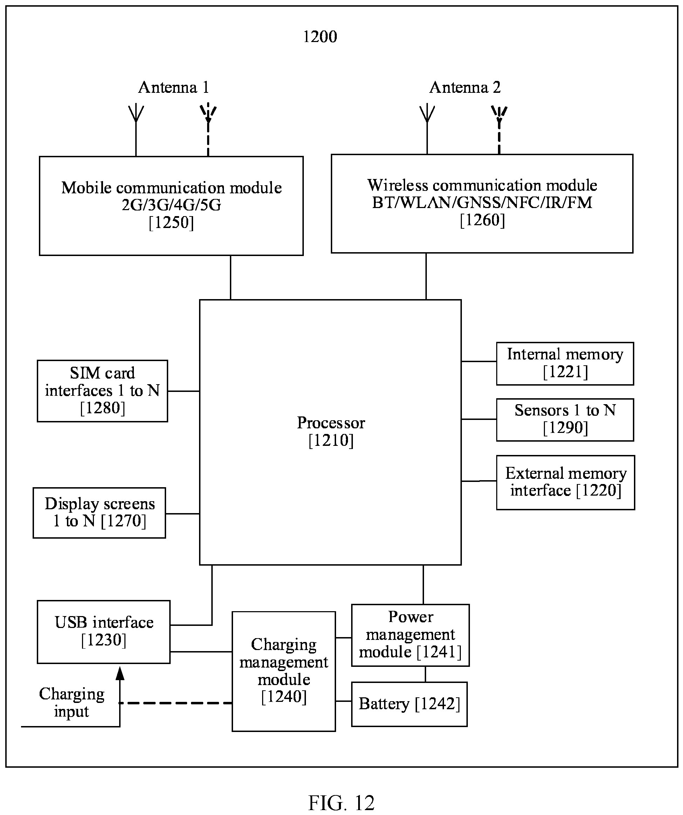

FIG. 12 is a schematic diagram of an apparatus for managing an auxiliary device according to an embodiment of this application.

As shown in FIG. 12, an apparatus 1200 for managing an auxiliary device is provided. The apparatus 1200 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the apparatus 1200 is not specially limited in embodiments of this application.

The apparatus 1200 may include a processor 1210, an external memory interface 1220, an internal memory 1221, a universal serial bus (universal serial bus, USB) interface 1230, a charging management module 1240, a power management module 1241, a battery 1242, an antenna 1, an antenna 2, a mobile communication module 1250, a wireless communication module 1260, a display screen 1270, a subscriber identity module (subscriber identity module, SIM) card interface 1280, a sensor 1290, and the like.

It may be understood that the structure shown in this embodiment of the present invention constitutes no specific limitation on the apparatus 1200. In some other embodiments of this application, the apparatus 1200 may include more or fewer components than those shown in the figure, or some components may be combined, or some components may be split, or different component arrangements may be used. The components in the figure may be implemented by hardware, software, or a combination of software and hardware.

The processor 1210 may include one or more processing units. For example, the processor 1210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 1210, and is configured to store instructions and data. In some embodiments, the memory in the processor 1210 is a cache. The memory may store instructions or data that has been used or cyclically used by the processor 1210. If the processor 1210 needs to use the instructions or the data again, the processor 1210 may directly invoke the instructions or the data from the memory. This avoids repeated access, reduces waiting time of the processor 1210, and improves system efficiency.

In some embodiments, the processor 1210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) interface, and/or the like.

It may be understood that an interface connection relationship between the modules illustrated in this embodiment of the present invention is merely an example for description, and does not constitute a limitation on a structure of the apparatus 1200. In some other embodiments of this application, the apparatus 1200 may alternatively use an interface connection manner different from that in the foregoing embodiment, or a combination of a plurality of interface connection manners.

The external memory interface 1220 may be used to connect to an external storage card, for example, a micro SD card, to extend a storage capability of the apparatus 1200. The external storage card communicates with the processor 1210 through the external memory interface 1220, to implement a data storage function, for example, storing a file such as audio data in the external storage card.

The internal memory 1221 may be configured to store computer-executable program code, and the executable program code includes instructions. The internal memory 1221 may include a high-speed random access memory, or may include a nonvolatile memory such as at least one disk storage device, a flash memory, or a universal flash storage (universal flash storage, UFS). The processor 1210 runs the instructions stored in the internal memory 1221 and/or the instructions stored in the memory disposed in the processor, to implement various functional applications and data processing of the apparatus 1200.

The sensor 1290 may include various sensors that may be required, for example, an infrared sensor, a gyroscope, a gravity sensor, an acceleration sensor, an angular velocity sensor, a PPG sensor, a GPS sensor, and a fingerprint sensor.

It may be understood that if the apparatus 1200 is a wearable device, the mobile communication module 1250 and the SIM card interface 1280 may not be included.

The apparatus 1200 provided in this application can implement any function of the terminal device or the wearable device in the examples described in FIG. 3 to FIG. 11. For a specific implementation, refer to the corresponding descriptions in FIG. 3 to FIG. 11. Details are not described herein again.

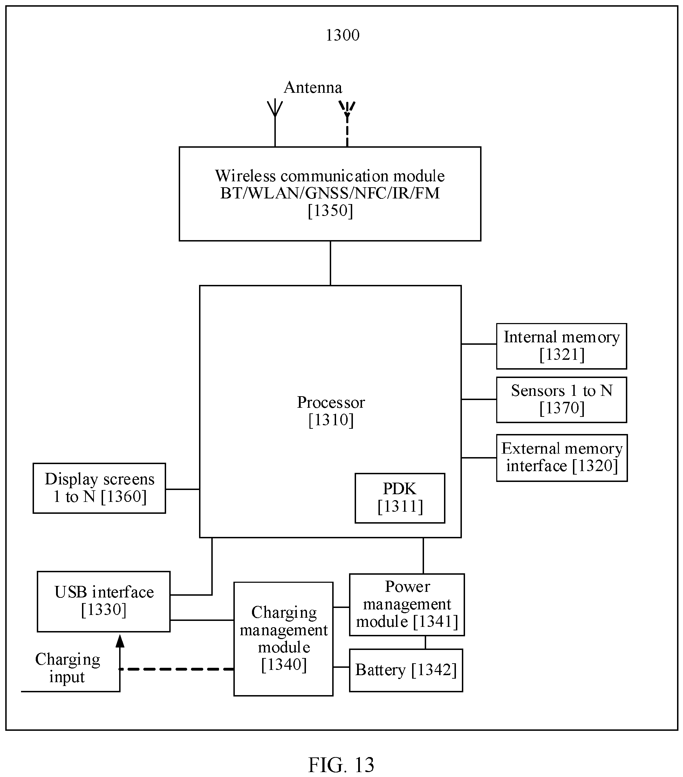

FIG. 13 is a schematic diagram of an auxiliary device according to an embodiment of this application.

As shown in FIG. 13, an auxiliary device 1300 is provided. The auxiliary device 1300 may be an AR device, a VR device, an AI device, a wearable device, an in-vehicle device, a smart home device, a smart city device, any device that can perform health monitoring, and/or the like. A specific type of the auxiliary device 1300 is not specially limited in this embodiment of this application.

The auxiliary device 1300 may include a processor 1310, an external memory interface 1320, an internal memory 1321, a USB interface 1330, a charging management module 1340, a power management module 1341, a battery 1342, an antenna, a wireless communication module 1350, a display screen 1360, a sensor 1370, and the like.

It may be understood that the structure shown in this embodiment of the present invention does not constitute a specific limitation on the auxiliary device 1300. In some other embodiments of this application, the auxiliary device 1300 may include more or fewer components than those shown in the figure, or some components may be combined, or some components may be split, or different component arrangements may be used. The components in the figure may be implemented by hardware, software, or a combination of software and hardware.

The processor 1310 may include one or more processing units. For example, the processor 1310 may include an AP, a modem processor, a GPU, an ISP, a controller, a video codec, a DSP, a baseband processor, and/or an NPU. Different processing units may be independent components, or may be integrated into one or more processors.

The controller may generate an operation control signal based on instruction operation code and a time sequence signal, to complete control of instruction reading and instruction execution.

A memory may be further disposed in the processor 1310, and is configured to store instructions and data. In some embodiments, the memory in the processor 1310 is a cache. The memory may store instructions or data that has been used or cyclically used by the processor 1310. If the processor 1310 needs to use the instructions or the data again, the processor 1310 may directly invoke the instructions or the data from the memory. This avoids repeated access, reduces waiting time of the processor 1310, and improves system efficiency.

In some embodiments, the processor 1310 may include one or more interfaces. The interface may include an I2C interface, an I2S interface, a PCM interface, a UART interface, an MIPI, a GPIO interface, a USB interface, and/or the like.

It may be understood that an interface connection relationship between the modules illustrated in this embodiment of the present invention is merely an example for description, and does not constitute a limitation on a structure of the auxiliary device 1300. In some other embodiments of this application, the auxiliary device 1300 may alternatively use an interface connection manner different from that in the foregoing embodiment, or a combination of a plurality of interface connection manners.

The external memory interface 1320 may be configured to connect to an external storage card, for example, a micro SD card, to extend a storage capability of the auxiliary device 1300. The external storage card communicates with the processor 1310 through the external memory interface 1320, to implement a data storage function, for example, storing a file such as audio data in the external storage card.

The internal memory 1321 may be configured to store computer-executable program code, and the executable program code includes instructions. The internal memory 1321 may include a high-speed random access memory, and may also include a non-volatile memory, for example, at least one magnetic disk storage device, a flash storage device, or a UFS. The processor 1310 runs the instructions stored in the internal memory 1321 and/or the instructions stored in the memory disposed in the processor, to implement various functional applications and data processing of the auxiliary device 1300.

The sensor 1370 may include various sensors that may be required, for example, an infrared sensor, a gyroscope, a gravity sensor, an acceleration sensor, an angular velocity sensor, a PPG sensor, a GPS sensor, and a fingerprint sensor.

The auxiliary device 1300 provided in this application may implement any function of the auxiliary device 600 of the non-standard protocol type or the auxiliary device of the first non-standard protocol type in the examples described in FIG. 7 to FIG. 11. For a specific implementation, refer to the corresponding descriptions in FIG. 7 to FIG. 11. Details are not described herein again.

A person skilled in the art may be further aware that, in combination with the examples described in embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions of each particular application, but it should not be considered that the implementation goes beyond the scope of this application.

A person of ordinary skill in the art may understand that all or some of the steps in the foregoing method of embodiments may be implemented by a program instructing a processor. The foregoing program may be stored in a computer-readable storage medium. The storage medium may be a non-transitory (non-transitory) medium, for example, a random-access memory, a read-only memory, a flash memory, a hard disk, a solid state drive, a magnetic tape (magnetic tape), a floppy disk (floppy disk), an optical disc (optical disc), or any combination thereof.

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for managing an auxiliary device, wherein the method is applied to a terminal device or a wearable device, the terminal device or the wearable device comprises a target application, the target application comprises a device management service software development kit SDK, and the method comprises:
receiving a broadcast message sent by at least one auxiliary device;
determining, based on the broadcast message, a device type of the auxiliary device that sends the broadcast message;
determining, based on the device type of the auxiliary device, a dedicated transceiver corresponding to the device type; and
communicating with the auxiliary device through the dedicated transceiver, so that the target application performs data exchange of target data with the auxiliary device, wherein the target application sends and/or receives the target data through the device management service SDK.

2. The method according to claim 1, wherein the communicating with the auxiliary device through the dedicated transceiver comprises:
receiving, through the dedicated transceiver, the target data sent by the auxiliary device;
sending the target data to a convergence and forwarding module through the dedicated transceiver;
determining, based on a pre-configured target application and target data relationship, the target application corresponding to the target data; and
sending the target data to the device management service SDK through the convergence and forwarding module, so that the target application reads and uses the target data through the device management service SDK.

3. The method according to claim 2, wherein if the method is applied to the wearable device, before the sending the target data to the device management service SDK through the convergence and forwarding module, the method further comprises:
determining that the target application is a target application of the terminal device or a target application of the wearable device; and
sending the target data to the terminal device if the target application is the target application of the terminal device.

4. The method according to any one of claims 1 to 3, wherein the communicating with the auxiliary device through the dedicated transceiver comprises:
sending, through the device management service SDK, the target data generated by the target application to the convergence and forwarding module;
forwarding the target data to the dedicated transceiver through the convergence and forwarding module; and
sending the target data to the auxiliary device through the dedicated transceiver.

5. The method according to any one of claims 1 to 4, wherein the device type comprises: a standard device type and a first non-standard device type; and
the dedicated transceiver comprises: a standard protocol transceiver, wherein
the standard protocol transceiver is a dedicated transceiver corresponding to an auxiliary device of the standard device type and an auxiliary device of the first non-standard device type.

6. The method according to claim 5, wherein the auxiliary device of the first non-standard device type comprises a product development kit PDK; and
the communicating with the auxiliary device through the dedicated transceiver comprises:
receiving, through the standard protocol transceiver, the target data sent by the auxiliary device of the first non-standard device type, wherein the target data is target data determined by the auxiliary device of the first non-standard device type by performing protocol format conversion through the PDK.

7. The method according to any one of claims 1 to 6, wherein the device type comprises: a second non-standard device type; and
the dedicated transceiver comprises: a non-standard protocol transceiver, wherein
the non-standard protocol transceiver is a dedicated transceiver corresponding to an auxiliary device of the second non-standard device type.

8. The method according to claim 7, wherein the communicating with the auxiliary device through the dedicated transceiver comprises:
performing, through the non-standard protocol transceiver, protocol format conversion on data that is in a non-standard protocol format and that is received from the auxiliary device of the second non-standard device type, to obtain the target data; and
performing, through the non-standard protocol transceiver, protocol format conversion on the target data sent to the auxiliary device of the second non-standard device type, to obtain the data in the non-standard protocol format.

9. The method according to claim 7 or 8, wherein the method further comprises:
checking, through a non-standard protocol transceiver interface, the target data sent to and received by the non-standard protocol transceiver, and converting a protocol format of the data in the non-standard protocol format in the target data to a standard protocol format.

10. The method according to any one of claims 1 to 9, wherein if the method is applied to the terminal device, the device type comprises: a wearable device type; and
the dedicated transceiver comprises: a wearable protocol transceiver, wherein
the wearable protocol transceiver is a dedicated transceiver corresponding to an auxiliary device of the wearable device type.

11. The method according to any one of claims 1 to 10, wherein the target data comprises: an operation instruction and/or parameter data.

12. The method according to any one of claims 1 to 11, wherein the target data is target data in a standard protocol format, and the standard protocol format is a generic attribute profile GATT format.

13. An apparatus for managing an auxiliary device, wherein the apparatus is a terminal device or a wearable device, the apparatus comprises a target application, the target application comprises a device management service software development kit SDK, and the apparatus comprises:
a universal transceiver, configured to receive a broadcast message sent by at least one auxiliary device; and
a processor, configured to be coupled to a memory, and read and execute instructions stored in the memory, wherein
when run, the processor executes the instructions, so that the processor is configured to determine, based on the broadcast message, a device type of the auxiliary device that sends the broadcast message;
the processor is further configured to determine, based on the device type of the auxiliary device, a dedicated transceiver corresponding to the device type; and
the processor is further configured to communicate with the auxiliary device through the dedicated transceiver, so that the target application performs data exchange of target data with the auxiliary device, wherein the target application sends and/or receives the target data through the device management service SDK.

14. The apparatus according to claim 13, wherein the processor is further configured to:
control the dedicated transceiver to receive the target data sent by the auxiliary device;
control the dedicated transceiver to send the target data to a convergence and forwarding module;
determine, based on a pre-configured target application and target data relationship, the target application corresponding to the target data; and
control the convergence and forwarding module to send the target data to the device management service SDK, so that the target application reads and uses the target data through the device management service SDK.

15. The apparatus according to claim 14, wherein if the apparatus is the wearable device, the processor is further configured to:
determine that the target application is a target application of the terminal device or a target application of the wearable device; and
send the target data to the terminal device through the universal transceiver if the target application is the target application of the terminal device.

16. The apparatus according to any one of claims 13 to 15, wherein the processor is further configured to:
send, through the device management service SDK, the target data generated by the target application to the convergence and forwarding module;
control the convergence and forwarding module to forward the target data to the dedicated transceiver; and
control the dedicated transceiver to send the target data to the auxiliary device.

17. The apparatus according to any one of claims 13 to 16, wherein, the device type comprises: a standard device type and a first non-standard device type; and
the dedicated transceiver comprises: a standard protocol transceiver, wherein
the standard protocol transceiver is a dedicated transceiver corresponding to an auxiliary device of the standard device type and an auxiliary device of the first non-standard device type.

18. The apparatus according to claim 17, wherein the processor is further configured to:
control the standard protocol transceiver to receive the target data sent by the auxiliary device of the first non-standard device type, wherein the target data is target data determined by the auxiliary device of the first non-standard device type by performing protocol format conversion through a product development kit PDK.

19. The apparatus according to any one of claims 13 to 18, wherein the device type comprises: a second non-standard device type; and
the dedicated transceiver comprises: a non-standard protocol transceiver, wherein
the non-standard protocol transceiver is a dedicated transceiver corresponding to an auxiliary device of the second non-standard device type.

20. The apparatus according to claim 19, wherein the processor is further configured to:
control the non-standard protocol transceiver to perform protocol format conversion on data that is in a non-standard protocol format and that is received from the auxiliary device of the second non-standard device type, to obtain the target data; and
control the non-standard protocol transceiver to perform protocol format conversion on the target data sent to the auxiliary device of the second non-standard device type, to obtain the data in the non-standard protocol format.

21. The apparatus according to claim 19 or 20, wherein the apparatus further comprises a non-standard protocol transceiver interface; and
the processor is further configured to control the non-standard protocol transceiver interface to check the target data sent to and received by the non-standard protocol transceiver, and convert a protocol format of the data in the non-standard protocol format in the target data to a standard protocol format.

22. The apparatus according to any one of claims 13 to 21, wherein if the apparatus is the terminal device, the device type comprises: a wearable device type; and
the dedicated transceiver comprises: a wearable protocol transceiver, wherein
the wearable protocol transceiver is a dedicated transceiver corresponding to an auxiliary device of the wearable device type.

23. The apparatus according to any one of claims 13 to 22, wherein the target data comprises: an operation instruction and/or parameter data.

24. The apparatus according to any one of claims 13 to 23, wherein the target data is target data in a standard protocol format, and the standard protocol format is a generic attribute profile GATT format.

25. An auxiliary device, wherein a product development kit PDK is pre-installed in the auxiliary device, and the auxiliary device comprises:
a sensor, configured to generate parameter data;
a processor, configured to be coupled to a memory, and read and execute instructions stored in the memory, wherein
when run, the processor executes the instructions, so that the processor is configured to control the PDK to perform protocol format conversion on the parameter data and/or an operation instruction, to obtain target data; and
a sender, configured to send the target data.

26. The auxiliary device according to claim 25, wherein the auxiliary device further comprises:
a receiver, configured to receive the target data sent by a terminal device or a wearable device, wherein
the processor is further configured to control the PDK to perform protocol format conversion on the target data, to obtain the parameter data and/or the operation instruction.

27. A computer-readable storage medium, wherein the computer readable storage medium stores instructions, and when the instructions run on a terminal, the terminal is enabled to perform the method according to any one of claims 1 to 12.

28. A computer device comprising instructions, wherein when the computer device runs on a terminal, the terminal is enabled to perform the method according to any one of claims 1 to 12.
